# EUROPEAN PATENT APPLICATION

(11) **EP 4 465 727 A1**
(43) Date of publication of application: **20.11.2024**
(21) Application number: 22919106.9
(22) Date of filing: 29.12.2022
(51) Int. Cl.: H04W 72/20, H04W 72/56, H04W 72/566, H04L 1/18

(54) **METHOD AND DEVICE FOR INTER-UE COORDINATION IN SIDELINK**

(30) Priority: 10.01.2022 KR 20220003601
(71) Applicant: Hyundai Motor Company, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HONG, Ui Hyun, Hwaseong-si, Gyeonggi-do 18280 (KR); HAHN, Gene Back, Hwaseong-si, Gyeonggi-do 18280 (KR); SON, Hyuk Min, Seoul 05649 (KR)
(74) Representative: Viering, Jentschura & Partner mbB Patent- und Rechtsanwälte
(86) International application number: PCT/KR2022/021664
(87) International publication number: WO 2023/132569

(57) **Abstract**

A method and a device for inter-UE coordination in a sidelink are disclosed. A method of UE #3 comprises the steps of: performing an operation of receiving IUC request signal #1 from UE #1 and an operation of receiving IUC request signal #2 from UE #2; determining one of UE #1 and UE #2 as a reception target of IUC information on the basis of priority; and transmitting the IUC information generated on the basis of IUC request signal #1 or IUC request signal #2 to the reception target.

## Description

### [Technical Field]

The present disclosure relates to a sidelink communication technique, and more particularly, to a technique for transmitting and receiving inter-user equipment (UE) coordination information.

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in sidelink communication, a user-equipment (UE)-B may request a UE-A to transmit inter-UE coordination information. The UE-A may transmit the inter-UE coordination information to the UE-B at the request of the UE-B. When transmission of inter-UE coordination information is requested from multiple UE-Bs, and the UE-A is capable of transmitting inter-UE information for one request, methods for the UE-A to select one request among the multiple requests are required. When a first UE requests a second UE to transmit inter-UE coordination information, and the second UE requests the first UE to transmit inter-UE coordination information, methods for determining a UE to transmit inter-UE coordination information among the first UE and the second UE are required.

### [Disclosure]

### [Technical Problem]

The present disclosure is directed to providing a method and an apparatus for transmitting and receiving inter-UE coordination information in sidelink communication.

### [Technical Solution]

A method of a user equipment (UE) #3, according to a first exemplary embodiment of the present disclosure for achieving the above-described objective, may comprise: performing an operation of receiving an inter-UE coordination (IUC) request signal #1 from a UE #1 and an operation of receiving an IUC request signal #2 from a UE #2; determining one of the UE #1 and the UE #2 as a reception target of IUC information based on priorities; and transmitting the IUC information generated based on the IUC request signal #1 or the IUC request signal #2 to the reception target.

The IUC request signal #1 may include information on a priority #1 of the UE #1, the IUC request signal #2 may include information on a priority #2 of the UE #2, the IUC information may be transmitted to the UE #1 when the priority #1 is higher than the priority #2, and the IUC information may be transmitted to the UE #2 when the priority #2 is higher than the priority #1.

The priorities may be determined based on a reception time #1 of the IUC request signal #1 and a reception time #2 of the IUC request signal #2.

When the reception time #1 is before the reception time #2 in a time domain, the priority #1 of the UE #1 may be determined to be higher than the priority #2 of the UE #2, and the IUC information may be transmitted to the UE #1; and when the reception time #2 is before the reception time #1 in the time domain, the priority #2 of the UE #2 may be determined to be higher than the priority #1 of the UE #1, and the IUC information may be transmitted to the UE #2.

The method may further comprise: transmitting, to the UE #1, a hybrid automatic repeat request (HARQ) feedback #1 for the IUC request signal #1; and transmitting, to the UE #2, a HARQ feedback #2 for the IUC request signal #2, wherein when both the HARQ feedback #1 and the HARQ feedback #2 indicate acknowledgement (ACK), the reception target may be determined based on information on a priority #1 of the UE #1 included in the IUC request signal #1 and information on a priority #2 of the UE #2 included in IUC request signal #2.

The method may further comprise: transmitting, to the UE #1, a HARQ feedback #1 for the IUC request signal #1; and transmitting, to the UE #2, a HARQ feedback #2 for the IUC request signal #2, wherein when the HARQ feedback #1 indicates ACK and the HARQ feedback #2 indicates negative ACK (NACK), the reception target may be determined as the UE #1 transmitting the IUC request signal #1 associated with the ACK.

The method may further comprise: transmitting, to the UE #1, a HARQ feedback #1 for the IUC request signal #1; and transmitting, to the UE #2, a HARQ feedback #2 for the IUC request signal #2, wherein when the HARQ feedback #1 indicates NACK and the HARQ feedback #2 indicates ACK, the reception target may be determined as the UE #2 transmitting the IUC request signal #2 associated with the ACK.

The IUC request signal #1 may be included in sidelink control information (SCI) #1 transmitted by the UE #1, and the IUC request signal #2 may be included in SCI #2 transmitted by the UE #2.

A method of a UE #1, according to a second exemplary embodiment of the present disclosure for achieving the above-described objective, may comprise: performing an operation of transmitting an inter-UE coordination (IUC) request signal #1 to a UE #2 and an operation of receiving an IUC request signal #2 from the UE #2; determining an IUC operation to be performed by the UE #1 based on a result of comparation between a priority #1 of the UE #1 and a priority #2 of the UE #2; and performing the IUC operation, wherein the IUC operation may be a first operation in which the UE #1 receives IUC information #1 according to the IUC request signal #1 from the UE #2 or a second operation in which the UE #1 transmits IUC information #2 according to the IUC request signal #2 to the UE #2.

The first operation may be performed when the priority #1 is higher than the priority #2, and the second operation may be performed when the priority #1 is lower than the priority #2.

The IUC request signal #1 may include information on the priority #1, the IUC request signal #2 may include information on the priority #2, the IUC request signal #1 may be included in sidelink control information (SCI) #1 transmitted by the UE #1, and the IUC request signal #2 may be included in SCI #2 transmitted by the UE #2.

When a transmission time #1 of the IUC request signal #1 is before a transmission time #2 of the IUC request signal #2, the priority #1 may be determined to be higher than the priority #2, and the first operation may be performed; and when the transmission time #1 is after the transmission time #2, the priority #1 may be determined to be lower than the priority #2, and the second operation may be performed.

The method may further comprise: performing an operation of receiving a hybrid automatic repeat request (HARQ) feedback #1 for the IUC request signal #1 from the UE #2 and an operation of transmitting a HARQ feedback #2 for the IUC request signal #2 to the UE #2, wherein when a transmission time #1 of the HARQ feedback #1 is before a transmission time #2 of the HARQ feedback #2, the priority #1 may be determined to be higher than the priority #2, and the first operation may be performed; and wherein when the transmission time #1 is after the transmission time #2, the priority #1 may be determined to be lower than the priority #2, and the second operation may be performed.

The method may further comprise: performing an operation of receiving a HARQ feedback #1 for the IUC request signal #1 from the UE #2 and an operation of transmitting a HARQ feedback #2 for the IUC request signal #2 to the UE #2, wherein when both the HARQ feedback #1 and the HARQ feedback #2 indicate acknowledgement (ACK), the IUC operation may be determined based on information on the priority #1 included in the IUC request signal #1 and information on the priority #2 included in the IUC request signal #2.

The method may further comprise: performing an operation of receiving a HARQ feedback #1 for the IUC request signal #1 from the UE #2 and an operation of transmitting a HARQ feedback #2 for the IUC request signal #2 to the UE #2, wherein when the HARQ feedback #1 indicates ACK and the HARQ feedback #2 indicate negative ACK (NACK), the priority #1 may be determined to be higher than the priority #2, and the first operation may be performed.

The method may further comprise: performing an operation of receiving a HARQ feedback #1 for the IUC request signal #1 from the UE #2 and an operation of transmitting a HARQ feedback #2 for the IUC request signal #2 to the UE #2, wherein when the HARQ feedback #1 indicates NACK and the HARQ feedback #2 indicate ACK, the priority #1 may be determined to be lower than the priority #2, and the second operation may be performed.

A UE #3, according to a third exemplary embodiment of the present disclosure for achieving the above-described objective, may comprise: a processor, and the processor may cause the UE #3 to perform: performing an operation of receiving an inter-UE coordination (IUC) request signal #1 from a UE #1 and an operation of receiving an IUC request signal #2 from a UE #2; determining one of the UE #1 and the UE #2 as a reception target of IUC information based on priorities; and transmitting the IUC information generated based on the IUC request signal #1 or the IUC request signal #2 to the reception target.

The IUC request signal #1 may include information on a priority #1 of the UE #1, the IUC request signal #2 may include information on a priority #2 of the UE #2, the IUC information may be transmitted to the UE #1 when the priority #1 is higher than the priority #2, and the IUC information may be transmitted to the UE #2 when the priority #2 is higher than the priority #1.

When a reception time #1 of the IUC request signal #1 is before a reception time #2 of the IUC request signal #2 in a time domain, a priority #1 of the UE #1 may be determined to be higher than a priority #2 of the UE #2, and the IUC information may be transmitted to the UE #1; and when the reception time #2 is before the reception time #1 in the time domain, the priority #2 of the UE #2 may be determined to be higher than the priority #1 of the UE #1, and the IUC information may be transmitted to the UE #2.

The processor may further cause the UE #3 to perform: transmitting, to the UE #1, a hybrid automatic repeat request (HARQ) feedback #1 for the IUC request signal #1; and transmitting, to the UE #2, a HARQ feedback #2 for the IUC request signal #2, wherein the priorities may be determined based on acknowledgement (ACK) or negative ACK (NACK) indicated by each of the HARQ feedback #1 and the HARQ feedback #2.

### [Advantageous Effects]

According to the present disclosure, the UE-A can receive IUC request signals from multiple UE-Bs, select one UE-B among them based on priorities, and transmit IUC information generated based on the IUC request signal(s) to the selected UE-B. When IUC request signals are exchanged between UEs, each UE may function as either UE-A or UE-B based on their respective priorities. Consequently, ambiguity regarding UE-A and UE-B can be resolved, enabling efficient sidelink communication.

### [Description of Drawings]

FIG. 1 is a conceptual diagram illustrating scenarios of Vehicle-to-Everything (V2X) communications.
FIG. 2 is a conceptual diagram illustrating a first exemplary embodiment of a communication system.
FIG. 3 is a conceptual diagram illustrating a first exemplary embodiment of a communication node constituting a communication system.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6 is a block diagram illustrating a first exemplary embodiment of a user plane protocol stack of a UE performing sidelink communication.
FIG. 7 is a block diagram illustrating a first exemplary embodiment of a control plane protocol stack of a UE performing sidelink communication.
FIG. 8 is a block diagram illustrating a second exemplary embodiment of a control plane protocol stack of a UE performing sidelink communication.
FIG. 9 is a sequence chart illustrating a first exemplary embodiment of an IUC information transmission method.
FIG. 10 is a sequence chart illustrating a second exemplary embodiment of an IUC information transmission method.
FIG. 11 is a sequence chart illustrating a third exemplary embodiment of an IUC information transmission method.
FIG. 12 is a sequence chart illustrating a fourth exemplary embodiment of an IUC information transmission method.
FIG. 13 is a sequence chart illustrating a fifth exemplary embodiment of an IUC information transmission method.
FIG. 14 is a sequence chart illustrating a sixth exemplary embodiment of an IUC information transmission method.
FIG. 15 is a sequence chart illustrating a seventh exemplary embodiment of an IUC information transmission method.
FIG. 16 is a sequence chart illustrating an eighth exemplary embodiment of an IUC information transmission method.
FIG. 17 is a sequence chart illustrating a ninth exemplary embodiment of an IUC information transmission method.
FIG. 18 is a sequence chart illustrating a tenth exemplary embodiment of an IUC information transmission method.
FIG. 19 is a sequence chart illustrating an eleventh exemplary embodiment of an IUC information transmission method.
FIG. 20 is a sequence chart illustrating a twelfth exemplary embodiment of an IUC information transmission method.
FIG. 21 is a sequence chart illustrating a thirteenth exemplary embodiment of an IUC information transmission method.
FIG. 22 is a sequence chart illustrating a fourteenth exemplary embodiment of an IUC information transmission method.
FIG. 23 is a sequence chart illustrating a fifteenth exemplary embodiment of an IUC information transmission method.
FIG. 24 is a sequence chart illustrating a sixteenth exemplary embodiment of an IUC information transmission method.
FIG. 25 is a sequence chart illustrating a seventeenth exemplary embodiment of an IUC information transmission method.
FIG. 26 is a sequence chart illustrating an eighteenth exemplary embodiment of an IUC information transmission method.
FIG. 27 is a sequence chart illustrating a nineteenth exemplary embodiment of an IUC information transmission method.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', `(re)configuration' may refer to `configuration', `reconfiguration', or `configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a `MAC message' or 'MAC signaling message'. A message used for PHY signaling may be referred to as a `PHY message' or `PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, `configuration of an operation (e.g., transmission operation)' may refer to signaling of configuration information (e.g., information elements, parameters) required for the operation and/or information indicating to perform the operation. `configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system' .

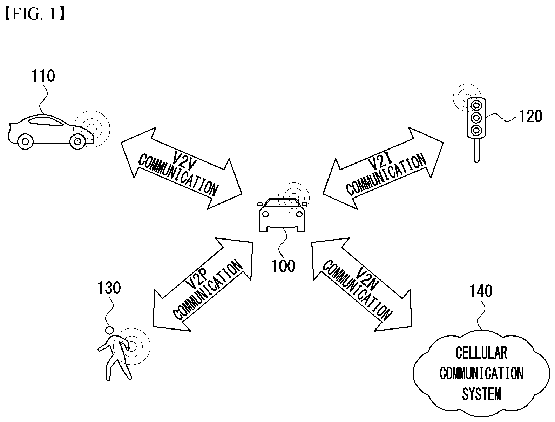

FIG. 1 is a conceptual diagram illustrating scenarios of Vehicle-to-Everything (V2X) communications.

As shown in FIG. 1, V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a communication system (e.g., communication network) 140, and the V2X communications supported by the communication system 140 may be referred to as 'Cellular-V2X (C-V2X) communications'. Here, the communication system 140 may include the 4G communication system (e.g., LTE communication system or LTE-A communication system), 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported by the communication system 140 may be performed based on sidelink communication technologies (e.g., Proximity Based Services (ProSe) and Device-to-Device (D2D) communication technologies, and the like). In the instant case, the communications between the vehicles 100 and 110 may be performed using at least one sidelink channel.

The V2I communications may include communications between the first vehicle 100 and an infrastructure (e.g., road side unit (RSU)) 120 located on a roadside. The infrastructure 120 may include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported by the communication system 140 may be performed based on sidelink communication technologies (e.g., ProSe and D2D communication technologies, and the like). In the instant case, the communications between the vehicle 100 and the infrastructure 120 may be performed using at least one sidelink channel.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported by the communication system 140 may be performed based on sidelink communication technologies (e.g., ProSe and D2D communication technologies, and the like). In the instant case, the communications between the communication node located in the vehicle 100 and the communication node carried by the person 130 may be performed using at least one sidelink channel.

The V2N communications may be communications between the first vehicle 100 (e.g., the communication node located in the vehicle 100) and the communication system (e.g., communication network) 140. The V2N communications may be performed based on the 4G communication technology (e.g., LTE or LTE-A specified as the 3GPP standards) or the 5G communication technology (e.g., NR specified as the 3GPP standards). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, a Wireless Personal Area Network (WPAN) communication technology defined in IEEE 802.15, or the like.

Meanwhile, the communication system 140 supporting the V2X communications may be configured as follows.

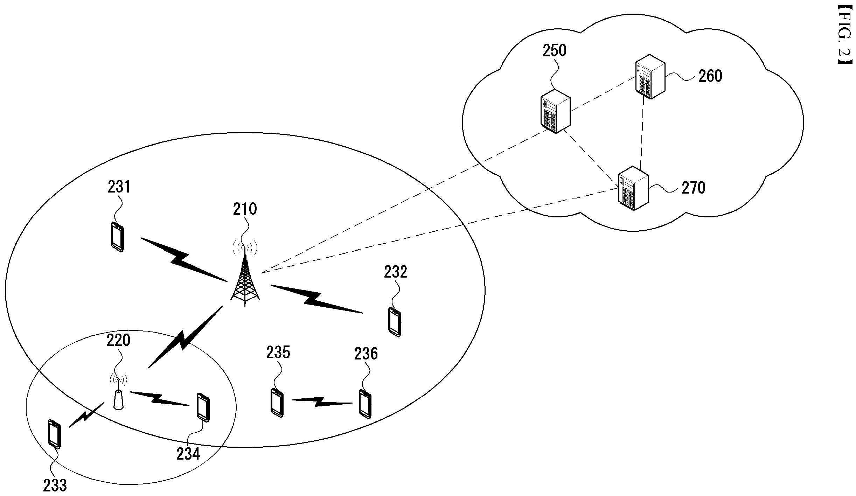

FIG. 2 is a conceptual diagram illustrating a first exemplary embodiment of a communication system.

As shown in FIG. 2, a communication system may include an access network, a core network, and the like. The access network may include a base station 210, a relay 220, user equipment (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the communication system supports the 4G communication technology, the core network may include a serving gateway (S-GW) 250, a packet data network (PDN) gateway (P-GW) 260, a mobility management entity (MME) 270, and the like.

When the communication system supports the 5G communication technology, the core network may include a user plane function (UPF) 250, a session management function (SMF) 260, an access and mobility management function (AMF) 270, and the like. Alternatively, when the communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slices configured in the core network.

The communication nodes (e.g., base station, relay, UE, S-GW, P-GW, MME, UPF, SMF, AMF, etc.) constituting the communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) constituting the communication system may be configured as follows.

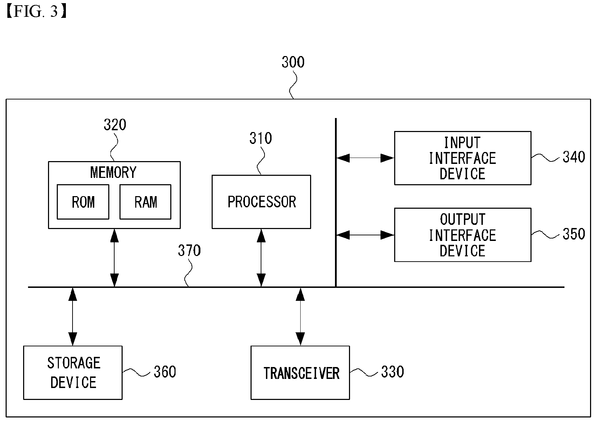

FIG. 3 is a conceptual diagram illustrating a first exemplary embodiment of a communication node constituting a communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one program command stored in at least one of the memory 320 and the storage device 360. The processor 310 may refer to a central processing unit (CPU), a graphics processing unit (GPU), or a dedicated processor on which methods in accordance with exemplary embodiments of the present disclosure are performed. Each of the memory 320 and the storage device 360 may include at least one of a volatile storage medium and a non-volatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to a cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), evolved Node B (eNB), base transceiver station (BTS), radio remote head (RRH), transmission reception point (TRP), radio unit (RU), roadside unit (RSU), radio transceiver, access point, access node, or the like. The relay 220 may be referred to as a small base station, relay node, or the like. Each of the UEs 231 through 236 may be referred to as a terminal, access terminal, mobile terminal, station, subscriber station, mobile station, portable subscriber station, node, device, on-broad unit (OBU), or the like.

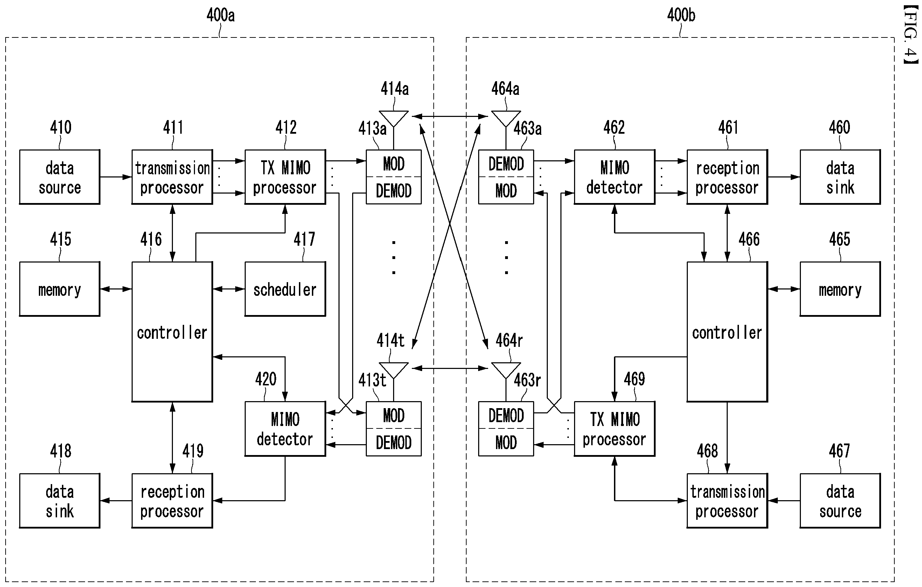

Meanwhile, communication nodes that perform communications in the communication network may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g., data unit) from a data source 410. The transmission processor 411 may receive control information from a controller 416. The control information may include at least one of system information, RRC configuration information (e.g., information configured by RRC signaling), MAC control information (e.g., MAC CE), or PHY control information (e.g., DCI, SCI).

The transmission processor 411 may generate data symbol(s) by performing processing operations (e.g., encoding operation, symbol mapping operation, etc.) on the data. The transmission processor 411 may generate control symbol(s) by performing processing operations (e.g., encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g., precoding operations) on the data symbol(s), control symbol(s), and/or synchronization/reference symbol(s). An output (e.g., symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g., de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 468 included in the second communication node 400b may receive data (e.g., data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g., precoding operations) on the data symbol(s), control symbol(s), and/or reference symbol(s). An output (e.g., symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g., de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

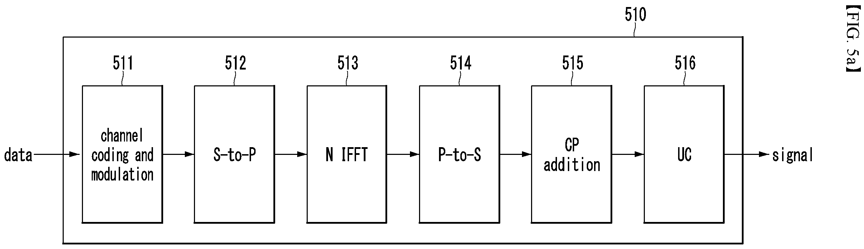

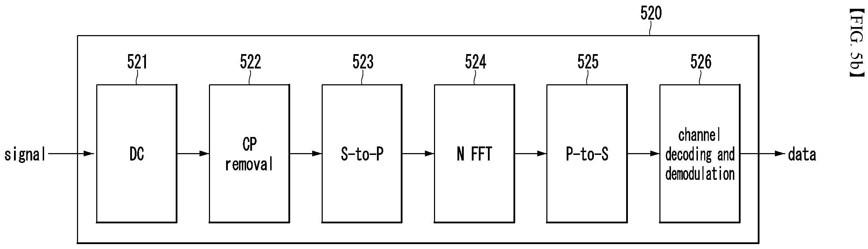

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and an up-converter (UC) 516. The reception path 520 may include a down-converter (DC) 521, a CP removal block 522, an S-to-P block 523, an N-point FFT block 524, a P-to-S block 525, and a channel decoding and a demodulation block 526. Here, N may be a natural number.

In the transmission path 510, information bits may be input to the channel coding and modulation block 511. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g., components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, communications between the UEs 235 and 236 may be performed based on sidelink communication technology (e.g., ProSe communication technology, D2D communication technology). The sidelink communication may be performed based on a one-to-one scheme or a one-to-many scheme. When V2V communication is performed using sidelink communication technology, the UE 235 may refer to a communication node located in the first vehicle 100 of FIG. 1, and the UE 236 may refer to a communication node located in the second vehicle 110 of FIG. 1. When V2I communication is performed using sidelink communication technology, the UE 235 may refer to a communication node located in the first vehicle 100 of FIG. 1, and the UE 236 may refer to a communication node located in the infrastructure 120 of FIG. 1. When V2P communication is performed using sidelink communication technology, the UE 235 may refer to a communication node located in the first vehicle 100 of FIG. 1, and the UE 236 may refer to a communication node carried by the person 130.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

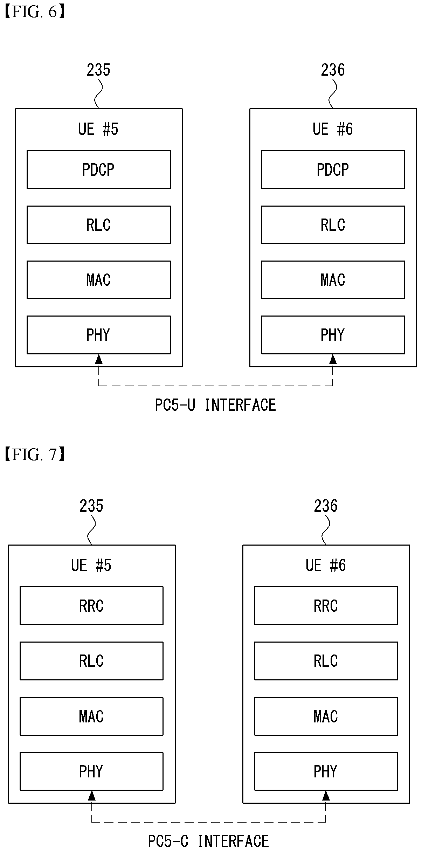

FIG. 6 is a block diagram illustrating a first exemplary embodiment of a user plane protocol stack of a UE performing sidelink communication.

As shown in FIG. 6, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications. Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

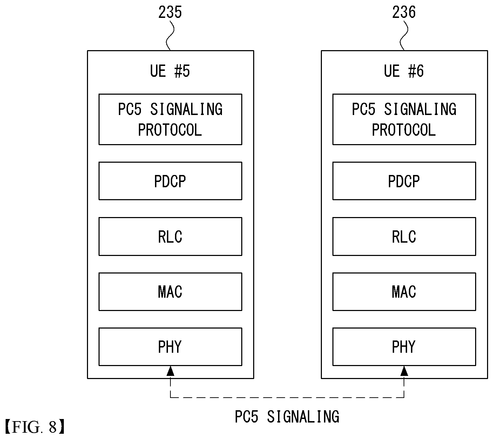

FIG. 7 is a block diagram illustrating a first exemplary embodiment of a control plane protocol stack of a UE performing sidelink communication, and FIG. 8 is a block diagram illustrating a second exemplary embodiment of a control plane protocol stack of a UE performing sidelink communication.

As shown in FIGS. 7 and 8, the UE 235 may be the UE 235 shown in FIG. 2 and the UE 236 may be the UE 236 shown in FIG. 2. The scenario for the sidelink communications between the UEs 235 and 236 may be one of the sidelink communication scenarios A to D of Table 1. The control plane protocol stack illustrated in FIG. 7 may be a control plane protocol stack for transmission and reception of broadcast information (e.g., Physical Sidelink Broadcast Channel (PSBCH)).

The control plane protocol stack shown in FIG. 7 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 8 may be a control plane protocol stack for one-to-one sidelink communication. The control plane protocol stack shown in FIG. 8 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by higher layer signaling. The PSCCH may be used for transmitting and receiving sidelink control information (SCI) and may also be configured in the UE (e.g., UE 235 or 236) by higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In the instant case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In the instant case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In the instant case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In the instant case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, sidelink communication methods will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The base station may transmit system information (e.g., SIB 12, SIB 13, SIB 14) and RRC messages including configuration information for sidelink communication (i.e. sidelink configuration information) to UE(s). The UE may receive the system information and RRC messages from the base station, identify the sidelink configuration information included in the system information and RRC messages, and perform sidelink communication based on the sidelink configuration information. The SIB 12 may include sidelink communication/discovery configuration information. The SIB 13 and SIB 14 may include configuration information for V2X sidelink communication.

The sidelink communication may be performed within a SL bandwidth part (BWP). The base station may configure SL BWP(s) to the UE using higher layer signaling. The higher layer signaling may include *SL-BWP-Config* and/or *SL-BWP-ConfigCommon. SL-BWP-Config* may be used to configure a SL BWP for UE-specific sidelink communication. *SL-BWP-ConfigCommon* may be used to configure cell-specific configuration information.

Furthermore, the base station may configure resource pool(s) to the UE using higher layer signaling. The higher layer signaling may include *SL-BWPPoolConfig*, *SL-BWP-PoolConfigCommon, SL-B WP-DiscPoolConfig,* and/or *SL-BWP-DiscPoolConfigCommon. SL-BWP-PoolConfig* may be used to configure a sidelink communication resource pool. *SL-BWP-PoolConfigCommon* may be used to configure a cell-specific sidelink communication resource pool. *SL-BWP-DiscPoolConfig* may be used to configure a resource pool dedicated to UE-specific sidelink discovery. *SL-BWP-DiscPoolConfigCommon* may be used to configure a resource pool dedicated to cell-specific sidelink discovery. The UE may perform sidelink communication within the resource pool configured by the base station.

The sidelink communication may support SL discontinuous reception (DRX) operations. The base station may transmit a higher layer message (e.g., *SL-DRX-Config)* including SL DRX-related parameter(s) to the UE. The UE may perform SL DRX operations based on *SL-DRX-Config* received from the base station. The sidelink communication may support inter-UE coordination operations. The base station may transmit a higher layer message (e.g., *SL-InterUE-CoordinationConfig*) including inter-UE coordination parameter(s) to the UE. The UE may perform inter-UE coordination operations based on *SL-InterUE-CoordinationConfig* received from the base station.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as `first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The SCI format 1-A may be used for scheduling a PSSCH and second-stage SCI. The SCI format 1-A may include at least one among priority information, frequency resource assignment information, time resource assignment information, resource reservation period information, demodulation reference signal (DMRS) pattern information, second-stage SCI format information, beta_offset indicator, number of DMRS ports, modulation and coding scheme (MCS) information, additional MCS table indicator, PSFCH overhead indicator, or conflict information receiver flag.

The SCI format 2-A may be used for decoding of a PSSCH. The SCI format 2-A may include at least one among a HARQ processor number, new data indicator (NDI), redundancy version (RV), source ID, destination ID, HARQ feedback enable/disable indicator, cast type indicator, or CSI request.

The SCI format 2-B may be used for decoding of a PSSCH. The SCI format 2-B may include at least one among a HARQ processor number, NDI, RV, source ID, destination ID, HARQ feedback enable/disable indicator, zone ID, or communication range requirement.

The SCI format 2-C may be used for decoding of a PSSCH. In addition, the SCI format 2-C may be used to provide or request inter-UE coordination information. The SCI format 2-C may include at least one among a HARQ processor number, NDI, RV, source ID, destination ID, HARQ feedback enable/disable indicator, CSI request, or providing/requesting indicator.

When a value of the providing/requesting indicator is set to 0, this may indicate that the SCI format 2-C is used to provide inter-UE coordination information. In the instant case, the SCI format 2-C may include at least one among resource combinations, first resource location, reference slot location, resource set type, or lowest subchannel indexes.

When a value of the providing/requesting indicator is set to 1, this may indicate that the SCI format 2-C is used to request inter-UE coordination information. In the instant case, the SCI format 2-C may include at least one among a priority, number of subchannels, resource reservation period, resource selection window location, resource set type, or padding bit(s).

Meanwhile, inter-UE coordination (IUC) information may be used in sidelink communication. A UE transmitting IUC information may be referred to as UE-A, and a UE receiving IUC information may be referred to as UE-B. The UE-B may refer to a UE requesting transmission of IUC information. In the present disclosure, among a plurality of UEs, a UE transmitting IUC information may be interpreted as the UE-A, and a UE receiving IUC information and/or a UE requesting transmission of IUC information may be interpreted as the UE-B. The UE-A may transmit IUC information to the UE-B at a request of the UE-B. Alternatively, the UE-A may transmit IUC information to the UE-B without a request of the UE-B. The UE-B may perform a resource sensing operation and/or a resource (re)selection operation based on the IUC information received from the UE-A.

The IUC information may include at least one of preferred resource information, non-preferred resource information, or resource conflict information. In IUC Scheme 1, the UE-A may transmit IUC information including preferred resource information and/or non-preferred resource information to the UE-B. In IUC Scheme 2, the UE-A may transmit IUC information including resource conflict information to the UE-B. The preferred resource information may refer to a preferred resource set, the non-preferred resource information may refer to a non-preferred resource set, and the resource conflict information may refer to a resource conflict set. The resource conflict information may indicate expected or potential resource conflicts. In the present disclosure, 'resource information' may be used as a term to mean the preferred resource information, non-preferred resource information, and/or resource conflict information, and 'resource set' may be used as a term to mean the preferred resource set, non-preferred resource set, and/or resource conflict set.

In scenarios defined in Table 3 below, a UE with a high priority may operate as the UE-B, and a UE with low priority may operate as the UE-A. However, when priorities of UEs are unknown or when the priorities of UEs are the same, ambiguity on the UE-A and/or UE-B may occur. The priority may be a priority for the UE. The priority may be determined based on a priority of data transmitted by the UE, packet delay budget (PDB), transmission order (or reception order) of an IUC request signal (e.g., SCI), and/or transmission order (or reception order) of a hybrid automatic repeat request (HARQ) feedback for an IUC request signal.

**[Table 3]**

| | **Description** |
|---|---|
| Scenario 1 | Each of UE #1 and UE #2 may transmit an IUC request signal to UE #3. When resource conflict(s) occur in one or more resources among resources indicated by an IUC request signal #1 of UE #1, and resource conflict(s) occur in one or more resources among resources indicated by an IUC request signal #2 of UE #2, ambiguity on a transmission/reception target (i.e. UE #1 or UE #2) of IUC information transmitted by UE #3 may occur. |
| Scenario 2 | UE #1 may transmit an IUC request signal #1 to UE #2, and UE #2 may transmit an IUC request signal #2 to UE #1. When resource conflict(s) occur in one or more resources among resources indicated by the IUC request signal #1 of UE #1, and resource conflict(s) occur in one or more resources among resources indicated by the IUC request signal #2 of UE #2, ambiguity on a transmission/reception target (i.e. UE #1 or UE #2) of IUC information may occur. |

In Scenario 1, the UE #3 may transmit IUC information to a UE with a higher priority among the UE #1 and UE #2. However, when the UE #3 does not know the priorities of the UE #1 and UE #2 or when the UE #1 and UE #2 have the same priority, ambiguity on a transmission/reception target (i.e. UE #1 or UE #2) of the IUC information transmitted by the UE #3 may occur.

In Scenario 2, among the UE #1 and UE #2, a UE with a higher priority may operate as the UE-B, and a UE with a lower priority may operate as the UE-A. That is, a UE with a lower priority may transmit IUC information to a UE with a higher priority. However, when the UE #1 and UE #2 do not know each other's priorities or when the UE #1 and UE #2 have the same priority, ambiguity on the UE-A and/or UE-B may occur.

The IUC request signal may refer to SCI (e.g., first-stage SCI and/or second-stage SCI). Alternatively, the IUC request signal may be an information element included in SCI (e.g., first-stage SCI and/or second-stage SCI). Alternatively, the IUC request signal may be a separate signal from the SCI. The IUC request signal may be transmitted on a PSCCH and/or PSSCH. The IUC request signal may include information on target resources for IUC. For example, the UE-A may perform operations to detect preferred resources, non-preferred resources, and/or resource conflicts in resources indicated by the IUC request signal. Information on a priority of the UE may be included in the SCI and/or IUC request signal. For example, priority information of the UE #1 may be included in SCI (or IUC request signal) transmitted by the UE #1, and priority information of the UE #2 may be included in SCI (or IUC request signal) transmitted by the UE #2.

### [IUC information transmission and reception method in Scenario 1]

In Scenario 1, each of the UEs may not know priorities of other UE(s). For example, the UE #3 may not know the priorities of the UE #1 and UE #2. Alternatively, the priorities of the UE #1 and UE #2 may be the same. That is, the UE #3 may determine that the priorities of the UE #1 and UE #2 are the same. In the case described above, the UE #3 may not be able to determine a UE (i.e. UE #1 or UE #2) that is a transmission/reception target of IUC information.

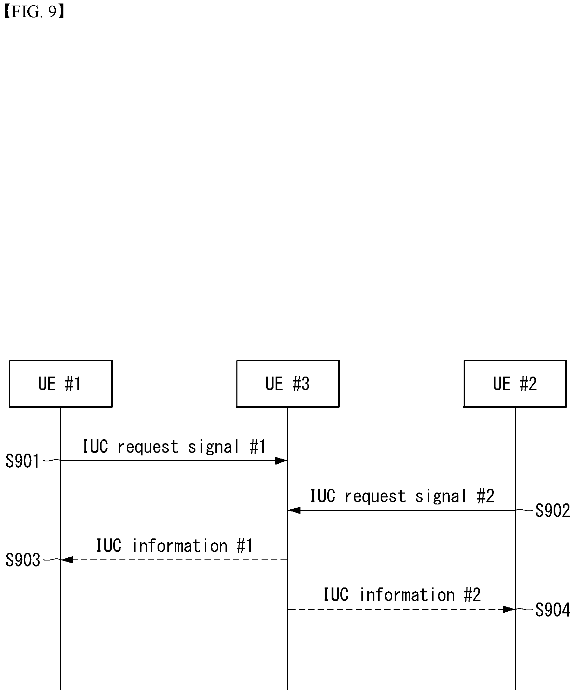

FIG. 9 is a sequence chart illustrating a first exemplary embodiment of an IUC information transmission method.

As shown in FIG. 9, the UE #1 and/or UE #2 may operate as the UE-Bs, and the UE #3 may operate as the UE-A. The UE #1 may transmit an IUC request signal #1 to the UE #3 (S901). The UE #3 may receive the IUC request signal #1 from the UE #1. The UE #2 may transmit an IUC request signal #2 to the UE #3 (S902). The UE #3 may receive the IUC request signal #2 from the UE #2. The UE #3 may generate IUC information #1 based on the IUC request signal #1 and transmit the IUC information #1 to the UE #1 (S903). The UE #1 may receive the IUC information #1 from the UE #3 and perform sidelink communication considering the IUC information #1. The UE #3 may generate IUC information #2 based on the IUC request signal #2 and transmit the IUC information #2 to the UE #2 (S904). The UE #2 may receive the IUC information #2 from the UE #3 and perform sidelink communication considering the IUC information #2.

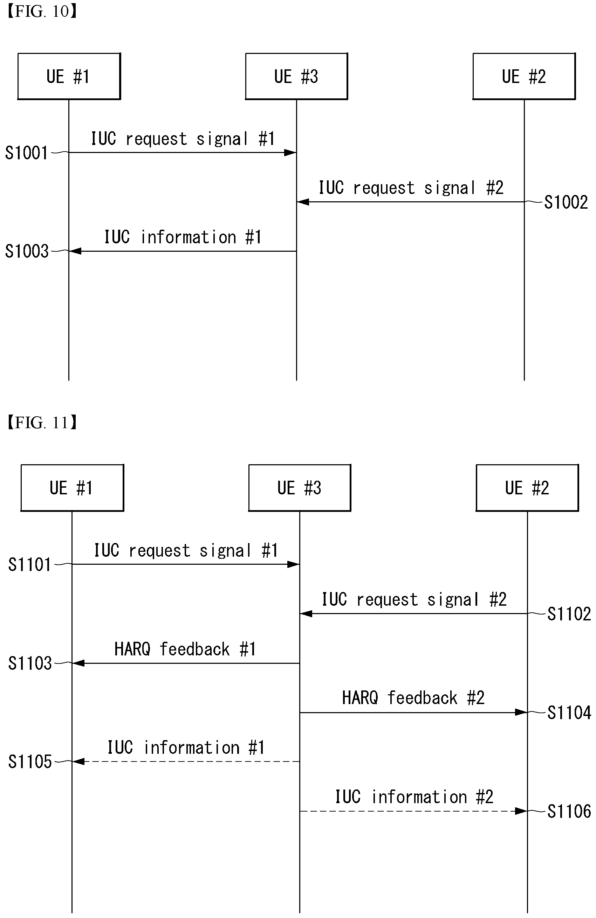

FIG. 10 is a sequence chart illustrating a second exemplary embodiment of an IUC information transmission method.

As shown in FIG. 10, the UE #1 and/or UE #2 may operate as the UE-Bs, and the UE #3 may operate as the UE-A. The UE #1 may transmit an IUC request signal #1 to the UE #3 (S1001). The UE #3 may receive the IUC request signal #1 from the UE #1. The UE #2 may transmit an IUC request signal #2 to the UE #3 (S1002). The UE #3 may receive the IUC request signal #2 from the UE #2. When the IUC request signal #1 includes priority information of the UE #1 and the IUC request signal #2 includes priority information of the UE #2, the UE #3 may determine a UE with a higher priority among the UE #1 and UE #2 based on the priority information included in the IUC request signals, and transmit IUC information to the determined UE. For example, if a priority of the UE #1 is higher than that of the UE #2, the UE #3 may transmit IUC information #1 generated based on the IUC request signal #1 and/or #2 to the UE #1. (S1003). The UE #3 may not transmit IUC information #2 to the UE #2. The UE #1 may receive the IUC information #1 from the UE #3 and perform sidelink communication considering the IUC information #1.

When the priority of the UE #1 is the same as the priority of the UE #2, the UE #3 may determine a priority based on a reception order (or transmission order) of the IUC request signals (e.g., SCIs). A priority of an IUC request signal received earlier in the time domain may be determined to be higher than that of an IUC request signal received later. In the time domain, if a reception time of the IUC request signal #1 is before a reception time of the IUC request signal #2, the UE #3 may determine that the UE #1 has a higher priority among the UE #1 and UE #2. Therefore, the UE #3 may transmit IUC information #1 to the UE #1 with a higher priority (S1003). The UE #1 may receive the IUC information #1 from the UE #3 and perform sidelink communication considering the IUC information #1.

FIG. 11 is a sequence chart illustrating a third exemplary embodiment of an IUC information transmission method.

As shown in FIG. 11, the UE #1 and/or UE #2 may operate as the UE-Bs, and the UE #3 may operate as the UE-A. The UE #1 may transmit an IUC request signal #1 to the UE #3 (S1101). The UE #3 may perform a reception operation for the IUC request signal #1 of the UE #1. The UE #2 may transmit an IUC request signal #2 to the UE #3 (S1102). The UE #3 may perform a reception operation for the IUC request signal #2 of the UE #2. The UE #3 may transmit a HARQ feedback #1 for the IUC request signal #1 to the UE #1 (S1103). The UE #1 may receive the HARQ feedback #1 for the IUC request signal #1 from the UE #3. The UE #3 may transmit a HARQ feedback #2 for the IUC request signal #2 to the UE #2 (S1104). The UE #2 may receive the HARQ feedback #2 for the IUC request signal #2 from the UE #3.

The UE #3 may transmit IUC information to one of the UE #1 and UE #2 based on priorities. For example, when a priority of the UE #1 is higher than that of the UE #2, UE #3 may transmit IUC information #1 to the UE #1 (S1105). On the other hand, when a priority of the UE #2 is higher than that of the UE #1, the UE #3 may transmit IUC information #2 to the UE #2 (S1106).

In the exemplary embodiment of FIG. 11, the priority of the UE #1 may be higher than the priority of the UE #2. Alternatively, even when the priority of the UE #1 is the same as the priority of the UE #2, if a reception time of the IUC request signal #1 is before a reception time of the IUC request signal #2 in the time domain, the priority of the UE #1 may be considered higher than the priority of the UE #2. The HARQ feedback #1 may indicate acknowledgment (ACK) or negative ACK (NACK), and the HARQ feedback #2 may indicate ACK or NACK. Operations defined in Table 4 may be performed depending on combinations of the HARQ feedback #1 and HARQ feedback #2.

**[Table 4]**

| **HARQ feedback #1** | **HARQ feedback #2** | **Operation** |
|---|---|---|
| ACK | ACK | When the priority of UE # 1 is considered higher than that of UE #2, the UE #3 may transmit IUC information #1 to UE #1 (i.e., exemplary embodiment of FIG. 12). |
| ACK | NACK | Since only the IUC request signal #1 is successfully received, the UE #3 may transmit IUC information #1 to UE #1 without considering priorities of UEs (i.e., exemplary embodiment of FIG. 12). |
| NACK | ACK | Since only the IUC request signal #2 is successfully received, the UE #3 may transmit IUC information #2 to UE #2 without considering priorities of UEs (i.e., exemplary embodiment of FIG. 13). |
| NACK | NACK | The UE #3 may not transmit IUC information to UE #1 and UE #2. |

In the operations according to the combinations of HARQ feedbacks in Table 4, a UE receiving NACK for the IUC request signal may not expect to receive IUC information from the UE #3 (i.e., UE-A). When a HARQ feedback for the IUC request signal is not received or when NACK for the IUC request signal is received, the UE may retransmit the IUC request signal.

Even when the IUC request signal #1 and IUC request signal #2 are successfully received, the UE #3 may transmit NACK for a specific IUC request signal to transmit one IUC information to one UE. For example, the UE #3 may transmit NACK for the IUC request signal #2 to the UE #2 with a lower priority. When NACK for the IUC request signal #2 is received, the UE #2 may not expect to receive IUC information #2 from the UE #3. The UE #2 may retransmit the IUC request signal #2 to the UE #3.

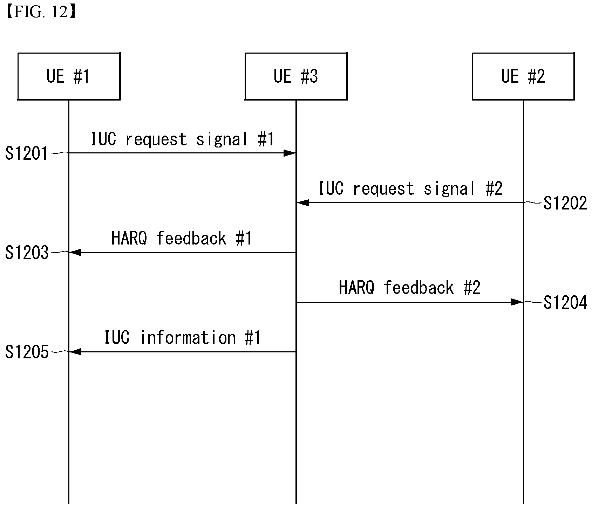

FIG. 12 is a sequence chart illustrating a fourth exemplary embodiment of an IUC information transmission method.

As shown in FIG. 12, the UE #1 and/or UE #2 may operate as the UE-Bs, and the UE #3 may operate as the UE-A. The UE #1 may transmit an IUC request signal #1 to the UE #3 (S1201). The UE #3 may perform a reception operation for the IUC request signal #1 of the UE #1. The UE #2 may transmit an IUC request signal #2 to the UE #3 (S1202). The UE #3 may perform a reception operation for the IUC request signal #2 of the UE #2. The UE #3 may transmit a HARQ feedback #1 for the IUC request signal #1 to the UE #1 (S1203). The UE #1 may receive the HARQ feedback #1 for the IUC request signal #1 from the UE #3. The UE #3 may transmit a HARQ feedback #2 for the IUC request signal #2 to the UE #2 (S1204). The UE #2 may receive the HARQ feedback #2 for the IUC request signal #2 from the UE #3. When a priority of the UE #1 is considered higher than that of the UE #2 or when the HARQ feedback #1 indicates ACK and the HARQ feedback #2 indicates NACK, the UE #3 may transmit IUC information #1 generated based on the IUC request signals #1 and/or #2 to the UE #1 (S1205). The UE #1 may receive the IUC information #1 from the UE #3 and perform sidelink communication considering the IUC information #1.

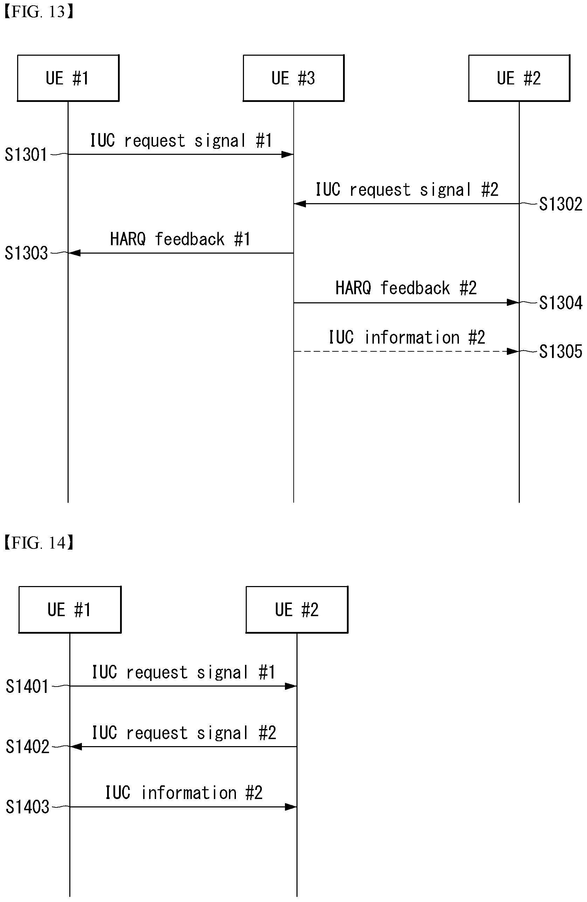

FIG. 13 is a sequence chart illustrating a fifth exemplary embodiment of an IUC information transmission method.

As shown in FIG. 13, the UE #1 and/or UE #2 may operate as the UE-Bs, and the UE #3 may operate as the UE-A. The UE #1 may transmit an IUC request signal #1 to the UE #3 (S 1301). The UE #3 may perform a reception operation for the IUC request signal #1 of the UE #1. The UE #2 may transmit an IUC request signal #2 to the UE #3 (S1302). The UE #3 may perform a reception operation for the IUC request signal #2 of the UE #2. The UE #3 may transmit a HARQ feedback #1 for the IUC request signal #1 to the UE #1 (S 1303). The UE #1 may receive the HARQ feedback #1 for the IUC request signal #1 from the UE #3. The UE #3 may transmit a HARQ feedback #2 for the IUC request signal #2 to the UE #2 (S1304). The UE #2 may receive the HARQ feedback #2 for the IUC request signal #2 from the UE #3. When the HARQ feedback #1 indicates NACK and the HARQ feedback #2 indicates ACK, the UE #3 may transmit IUC information #2 generated based on the IUC request signal #1 and/or #2 to the UE #2 (S1305). The UE #2 may receive the IUC information #2 from the UE #3 and perform sidelink communication considering the IUC information #2.

Meanwhile, resources indicated by the IUC request signal #1 of the UE #1 may overlap (e.g., partially or fully) with resources indicated by the IUC request signal #2 of the UE #2. In the instant case, the UE #3 (e.g., UE-A) may transmit IUC information (e.g., resource conflict information) for the overlapping resource(s) to a UE with a lower priority among the UE #1 and UE #2. The UE #3 may not transmit IUC information (e.g., resource conflict information) for the overlapping resource(s) to a UE with a higher priority. According to the above-described operation, the UE with the higher priority may perform sidelink communication in the overlapping resource(s), and the UE with the lower priority may not perform sidelink communication in the overlapping resource(s).

The UE #3 (e.g., UE-A) may identify a priority of a UE based on an IUC request signal received from the UE. For example, when the IUC request signal includes priority information of the UE, the UE #3 may determine a priority of the UE based on the information included in the IUC request signal. Alternatively, the UE #3 may determine a priority of the UE based on a reception order (or transmission order) of the IUC request signal in the time domain.

### [IUC information transmission and reception method in Scenario 2]

In Scenario 2, the UE #1 may not know the priority of the UE #2, and the UE #2 may not know the priority of the UE #1. In the instant case, ambiguity may arise regarding IUC operations respective performed by the UE #1 and UE #2. The IUC operation may be an operation where the UE-A transmits IUC information to the UE-B or an operation where the UE-B receives IUC information from the UE-A.

FIG. 14 is a sequence chart illustrating a sixth exemplary embodiment of an IUC information transmission method.

As shown in FIG. 14, the UE #1 may transmit an IUC request signal #1 to the UE #2 (S1401). The IUC request signal #1 may include priority information of the UE #1. The UE #2 may receive the IUC request signal #1 from the UE #1 and may identify a priority of the UE #1 based on the information included in the IUC request signal #1. The UE #2 may transmit an IUC request signal #2 to the UE #1 (S1402). The IUC request signal #2 may include priority information of the UE #2. The UE #1 may receive the IUC request signal #2 from the UE #2 and may identify a priority of the UE #2 based on the information included in the IUC request signal #2.

Each of the UE #1 and UE #2 may determine that the priority of the UE #2 is higher than that of the UE #1 based on the priority information. In the instant case, the UE #1 may operate as the UE-A, and the UE #2 may operate as the UE-B. Therefore, the UE #1 may transmit IUC information #2 generated based on the IUC request signal #1 and/or #2 to the UE #2 (S1403). The UE #2 may not transmit the IUC information #1 to the UE #1. The UE #2 may receive the IUC information #2 from the UE #1 and perform sidelink communication considering the IUC information #2.

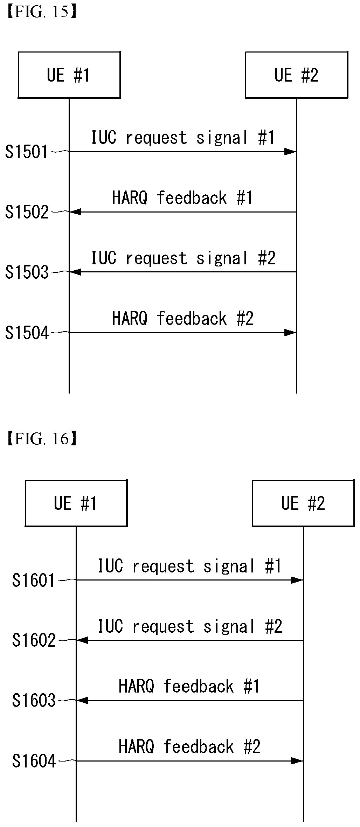

FIG. 15 is a sequence chart illustrating a seventh exemplary embodiment of an IUC information transmission method.

As shown in FIG. 15, the UE #1 may transmit an IUC request signal #1 to the UE #2 (S1501). The UE #2 may perform a reception operation for the IUC request signal #1 of the UE #1 and may transmit a HARQ feedback #1 for the IUC request signal #1 to the UE #1 (S1502). The UE #1 may receive the HARQ feedback #1 from the UE #2. The UE #2 may transmit an IUC request signal #2 to the UE #1 (S1503). The UE #1 may perform a reception operation for the IUC request signal #2 of the UE #2 and may transmit a HARQ feedback #2 for the IUC request signal #2 to the UE #2 (S1504). The UE #2 may receive the HARQ feedback #2 from the UE #1.

FIG. 16 is a sequence chart illustrating an eighth exemplary embodiment of an IUC information transmission method.

As shown in FIG. 16, the UE #1 may transmit an IUC request signal #1 to the UE #2 (S1601). The UE #2 may perform a reception operation for the IUC request signal #1 of the UE #1. The UE #2 may transmit an IUC request signal #2 to the UE #1 (S1602). The UE #1 may perform a reception operation for the IUC request signal #2 of the UE #2. The UE #2 may transmit a HARQ feedback #1 for the IUC request signal #1 to the UE #1 (S1603). The UE #1 may receive the HARQ feedback #1 from the UE #2. The UE #1 may transmit a HARQ feedback #2 for the IUC request signal #2 to the UE #2 (S1604). The UE #2 may receive the HARQ feedback #2 from the UE #1. PSFCH resources in the exemplary embodiment of FIG. 16 may be configured differently from PSFCH resources in the exemplary embodiment of FIG. 15.

The HARQ feedback #1 may indicate ACK or NACK, and the HARQ feedback #2 may indicate ACK or NACK. Operations defined in Table 5 may be performed depending on combinations of the HARQ feedback #1 and HARQ feedback #2. In the operations defined in Table 5, a priority of the UE #2 may be considered higher than a priority of the UE #1.

**[Table 5]**

| **HARQ feedback #1** | **HARQ feedback #2** | **Operation** |
|---|---|---|
| ACK | ACK | When the priority of UE #2 is considered higher than that of UE #1, the UE #1 may operate as the UE-A, and the UE #2 may operate as the UE-B. The UE #1 may transmit IUC information #2 to the UE #2 (i.e., exemplary embodiment of FIG. 17). |
| NACK | ACK | Since only the IUC request signal #2 is successfully received, the UE # 1 may operate as the UE-A, and the UE #2 may operate as the UE-B. The UE #1 may transmit IUC information #2 to the UE #2 (i.e., exemplary embodiment of FIG. 18). |
| ACK | NACK | Since only the IUC request signal #1 is successfully received, the UE #1 may operate as the UE-B, and the UE #2 may operate as the UE-A. The UE #2 may transmit IUC information #1 to the UE #1 (i.e., exemplary embodiment of FIG. 19). |
| NACK | NACK | The UE #1 and UE #2 may not transmit IUC information. |

In the operations according to the combinations of HARQ feedbacks in Table 5, a UE receiving NACK for the IUC request signal may not expect to receive IUC information. When a HARQ feedback for the IUC request signal is not received or when NACK for the IUC request signal is received, the UE may retransmit the IUC request signal.

When the IUC request signal #1 of the UE #1 is successfully received by the UE #2, even if the priority of the UE #2 is lower than the priority of the UE #1, the UE #2 may transmit NACK for the IUC request signal #1 to the UE #1 to receive IUC information #2 for the UE #1 with the higher priority. On the other hand, when the IUC request signal #2 of the UE #2 is successfully received by the UE #1, even if the priority of the UE #1 is lower than the priority of the UE #2, the UE #1 may transmit NACK for the IUC request signal #2 to the UE #2 to receive IUC information #1 for the UE #2 with the higher priority. According to the above-described operation, a UE with a higher priority may provide IUC information to a UE with a lower priority.

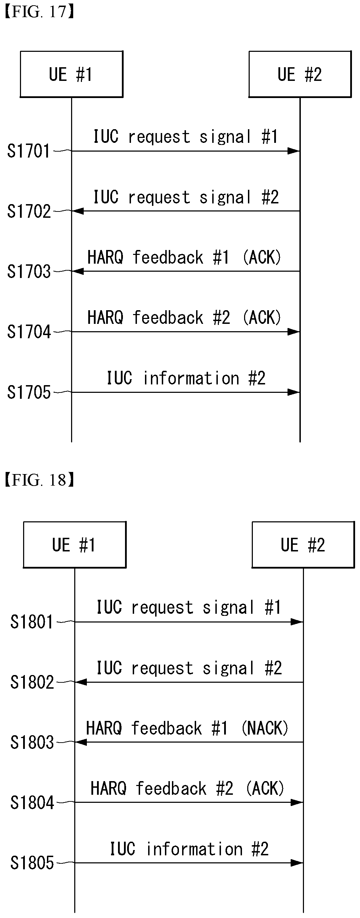

FIG. 17 is a sequence chart illustrating a ninth exemplary embodiment of an IUC information transmission method.

As shown in FIG. 17, the UE #1 may transmit an IUC request signal #1 to the UE #2 (S1701). The UE #2 may perform a reception operation for the IUC request signal #1 of the UE #1. The UE #2 may transmit an IUC request signal #2 to the UE #1 (S1702). The UE #1 may perform a reception operation for the IUC request signal #2 of the UE #2. The UE #2 may transmit a HARQ feedback #1 (i.e., ACK) for the IUC request signal #1 to the UE #1 (S1703). The UE #1 may receive the HARQ feedback #1 from the UE #2. Since the HARQ feedback #1 indicates ACK, the UE #1 may determine that the IUC request signal #1 has been successfully received at the UE #2. The UE #1 may transmit a HARQ feedback #2 (i.e., ACK) for the IUC request signal #2 to the UE #2 (S1704). The UE #2 may receive the HARQ feedback #2 from the UE #1. Since HARQ feedback #2 indicates ACK, the UE #2 may determine that the IUC request signal #2 has been successfully received at the UE #1.

Since a priority of the UE #2 is higher than that of the UE #1, the UE #1 may operate as the UE-A and the UE #2 may operate as the UE-B. The UE #1 may transmit IUC information #2 generated based on the IUC request signal #1 and/or #2 to the UE #2 (S1705). The UE #2 may receive the IUC information #2 from the UE #1 and perform sidelink communication considering the IUC information #2.

FIG. 18 is a sequence chart illustrating a tenth exemplary embodiment of an IUC information transmission method.

As shown in FIG. 18, the UE #1 may transmit an IUC request signal #1 to the UE #2 (S1801). The UE #2 may perform a reception operation for the IUC request signal #1 of the UE #1. The UE #2 may transmit an IUC request signal #2 to the UE #1 (S1802). The UE #1 may perform a reception operation for the IUC request signal #2 of the UE #2. The UE #2 may transmit a HARQ feedback #1 (i.e., NACK) for the IUC request signal #1 to the UE #1 (S1803). The UE #1 may receive the HARQ feedback #1 from the UE #2. Since the HARQ feedback #1 indicates NACK, the UE #1 may determine that reception (i.e. decoding) of the IUC request signal #1 has failed at the UE #2. The UE #1 may transmit a HARQ feedback #2 (i.e., ACK) for the IUC request signal #2 to the UE #2 (S1804). The UE #2 may receive the HARQ feedback #2 from the UE #1. Since the HARQ feedback #2 indicates ACK, the UE #2 may determine that the IUC request signal #2 has been successfully received at the UE #1.

When reception (i.e., decoding) of the IUC request signal #1 has failed at the UE #2, and reception of the IUC request signal #2 has succeeded at the UE #1, the UE #1 may operate as the UE-A, and the UE #2 may operate as the UE-B. The UE #1 may transmit IUC information #2 generated based on the IUC request signal #1 and/or #2 to the UE #2 (S1805). The UE #2 may receive the IUC information #2 from the UE #1 and perform sidelink communication considering the IUC information #2.

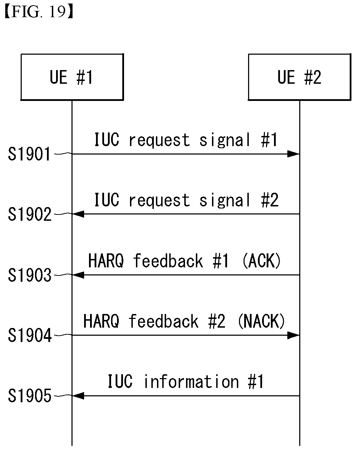

FIG. 19 is a sequence chart illustrating an eleventh exemplary embodiment of an IUC information transmission method.

As shown in FIG. 19, the UE #1 may transmit an IUC request signal #1 to the UE #2 (S1901). The UE #2 may perform a reception operation for the IUC request signal #1 of the UE #1. The UE #2 may transmit an IUC request signal #2 to the UE #1 (S1902). The UE #1 may perform a reception operation for the IUC request signal #2 of the UE #2. The UE #2 may transmit a HARQ feedback #1 (i.e., ACK) for the IUC request signal #1 to the UE #1 (S1903). The UE #1 may receive the HARQ feedback #1 from the UE #2. Since the HARQ feedback #1 indicates ACK, the UE #1 may determine that the IUC request signal #1 has been successfully received at the UE #2. The UE #1 may transmit a HARQ feedback #2 (i.e., NACK) for the IUC request signal #2 to the UE #2 (S1904). The UE #2 may receive the HARQ feedback #2 from the UE #1. Since the HARQ feedback #2 indicates NACK, the UE #2 may determine that reception (i.e., decoding) of the IUC request signal #2 has failed at the UE#2.

When reception of the IUC request signal #1 has succeeded at the UE #2, and reception (i.e., decoding) of the IUC request signal #2 has failed at the UE #1, the UE #1 may operate as the UE-B, and the UE #2 may operate as the UE-A. The UE #2 may transmit IUC information #1 generated based on the IUC request signal #1 and/or #2 to the UE #1 (S1905). The UE #1 may receive the IUC information #1 from the UE #2 and perform sidelink communication considering the IUC information #1.

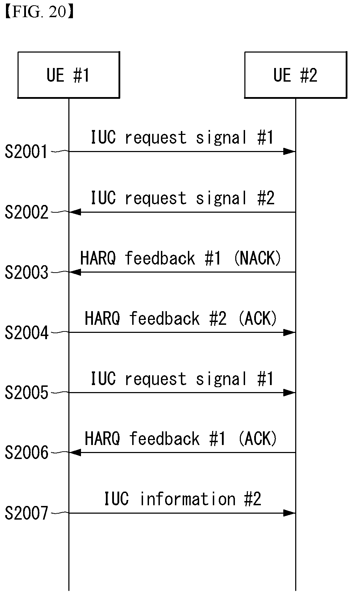

FIG. 20 is a sequence chart illustrating a twelfth exemplary embodiment of an IUC information transmission method.

As shown in FIG. 20, the UE #1 may transmit an IUC request signal #1 to the UE #2 (S2001). The UE #2 may perform a reception operation for the IUC request signal #1 of the UE #1. The UE #2 may transmit an IUC request signal #2 to the UE #1 (S2002). The UE #1 may perform a reception operation for the IUC request signal #2 of the UE #2. The UE #2 may transmit a HARQ feedback #1 (i.e., NACK) for the IUC request signal #1 to the UE #1 (S2003). The UE #1 may receive the HARQ feedback #1 from the UE #2. Since the HARQ feedback #1 indicates NACK, the UE #1 may determine that reception (i.e., decoding) of the IUC request signal #1 has failed at the UE #2. The UE #1 may transmit a HARQ feedback #2 (i.e. ACK) for the IUC request signal #2 to the UE #2 (S2004). The UE #2 may receive the HARQ feedback #2 from the UE #1. Since the HARQ feedback #2 indicates ACK, the UE #2 may determine that the IUC request signal #2 has been successfully received at the UE #1.

Since reception (i.e., decoding) of the IUC request signal #1 has failed at the UE #2, the UE #1 may retransmit the IUC request signal #1 to the UE #2 (S2005). The UE #2 may perform a reception operation for the IUC request signal #1 of the UE #1. The UE #2 may transmit a HARQ feedback #1 (i.e., ACK) for the IUC request signal #1 to the UE #1 (S2006). The UE #1 may receive the HARQ feedback #1 from the UE #2. Since the HARQ feedback #1 indicates ACK, the UE #1 may determine that the IUC request signal #1 has been successfully received at the UE #2.

The UE #1 may identify a priority of the UE #2 based on information included in the IUC request signal #2. The UE #2 may identify a priority of the UE #1 based on information included in the IUC request signal #1. When the priority of the UE #2 is higher than the priority of the UE #1, the UE #1 may operate as the UE-A, and the UE #2 may operate as the UE-B. Therefore, the UE #1 may transmit IUC information #2 generated based on the IUC request signal #1 and/or #2 to the UE #2 (S2007). The UE #2 may receive the IUC information #2 from the UE #1 and perform sidelink communication considering the IUC information #2.

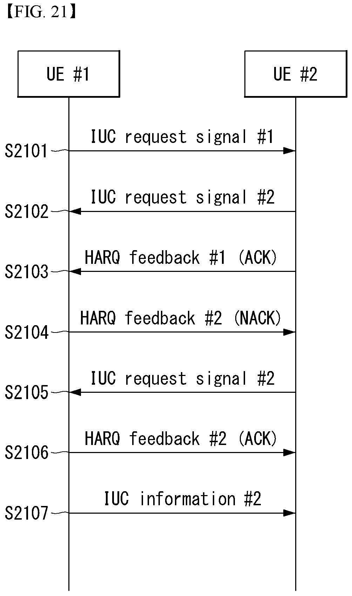

FIG. 21 is a sequence chart illustrating a thirteenth exemplary embodiment of an IUC information transmission method.

As shown in FIG. 21, the UE #1 may transmit an IUC request signal #1 to the UE #2 (S2101). The UE #2 may perform a reception operation for the IUC request signal #1 of the UE #1. The UE #2 may transmit an IUC request signal #2 to the UE #1 (S2102). The UE #1 may perform a reception operation for the IUC request signal #2 of the UE #2. The UE #2 may transmit a HARQ feedback #1 (i.e., ACK) for the IUC request signal #1 to the UE #1 (S2103). The UE #1 may receive the HARQ feedback #1 from the UE #2. Since the HARQ feedback #1 indicates ACK, the UE #1 may determine that the IUC request signal #1 has been successfully received at the UE #2. The UE #1 may transmit a HARQ feedback #2 (i.e., NACK) for the IUC request signal #2 to the UE #2 (S2104). The UE #2 may receive the HARQ feedback #2 from the UE #1. Since the HARQ feedback #2 indicates NACK, the UE #2 may determine that reception (i.e. decoding) of the IUC request signal #2 has failed at the UE#2.

Since reception (i.e., decoding) of the IUC request signal #2 has failed at the UE #1, the UE #2 may retransmit the IUC request signal #2 to the UE #1 (S2105). The UE #1 may perform a reception operation for the IUC request signal #2 of the UE #2. The UE #1 may transmit a HARQ feedback #2 (i.e., ACK) for the IUC request signal #2 to the UE #2 (S2106). The UE #2 may receive the HARQ feedback #2 from the UE #1. Since the HARQ feedback #2 indicates ACK, the UE #2 may determine that the IUC request signal #2 has been successfully received at the UE #1.

The UE #1 may identify a priority of the UE #2 based on information included in the IUC request signal #2. The UE #2 may identify a priority of the UE #1 based on information included in the IUC request signal #1. When the priority of the UE #2 is higher than the priority of the UE #1, the UE #1 may operate as the UE-A, and the UE #2 may operate as the UE-B. Therefore, the UE #1 may transmit IUC information #2 generated based on the IUC request signal #1 and/or #2 to the UE #2 (S2207). The UE #2 may receive the IUC information #2 from the UE #1 and perform sidelink communication considering the IUC information #2.

Since the HARQ feedback #1 in step S2003 of FIG. 20 indicates NACK, the IUC request signal #1 may be retransmitted in step S2005. When the IUC request signal #1 has been successfully received at the UE #2, the UEs may perform IUC operations (e.g., UE-A's operation, UE-B's operation) according to the priorities. Since the HARQ feedback #2 in step S2104 of FIG. 21 indicates NACK, the IUC request signal #2 may be retransmitted in step S2105. When the IUC request signal #2 has been successfully received at the UE #1, the UEs may perform IUC operations (e.g., UE-A's operation, UE-B's operation) according to the priorities.

In the exemplary embodiment of FIGS. 20 and 21, when a HARQ feedback for the retransmitted IUC request signal is not received within a preset time or when NACKs for the IUC request signal occur more than a preset number, as in the exemplary embodiments of FIGS. 18 and 19, a UE transmitting ACK for the IUC request signal may operate as the UE-A. The base station (or UE) may transmit information on the preset time (e.g., reception window for HARQ feedbacks) and/or the preset number (e.g., threshold for the number of NACKs) to the UE(s) using at least one of system information, RRC message, MAC message, or PHY message. The UE(s) may receive information on the preset time (e.g., reception window for HARQ feedbacks) and/or the preset number (e.g., threshold for the number of NACKs) from the base station or another UE.

The exemplary embodiments according to the cases in which the HARQ feedback for the IUC request signal is not received, modifications of the exemplary embodiments, and/or extensions of the exemplary embodiments may be applied. The exemplary embodiments according to the cases in which NACK for the IUC request signal occurs, modifications of the exemplary embodiments, and/or extensions of the exemplary embodiments may be applied.

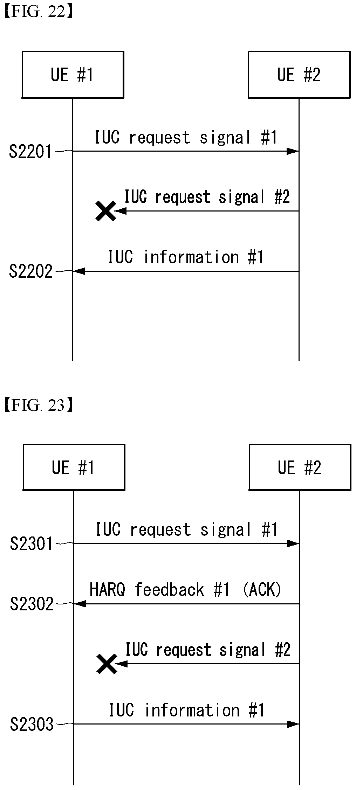

FIG. 22 is a sequence chart illustrating a fourteenth exemplary embodiment of an IUC information transmission method.

As shown in FIG. 22, the UE #1 may not know a priority of the UE #2, the UE #2 may not know a priority of the UE #1, and priority information of the UE may not be transmitted through an IUC request signal. Alternatively, the priority of the UE #1 may be the same as the priority of the UE #2. A UE operating as the UE-B may be determined based on a transmission order (or reception order) of the IUC request signals. A UE operating as the UE-A may be determined based on a reception order (or reception order) of the IUC request signals.

The UE #1 may transmit an IUC request signal #1 before the UE #2 (S2201). In the instant case, the UE #1 may operate as the UE-B. The UE #2 may receive the IUC request signal #1 from the UE #1. When the IUC request signal #1 of the UE #1 is received, the UE #2 may not transmit an IUC request signal #2. That is, the UE #2 may operate as the UE-A. The UE #2 may transmit IUC information #1 generated based on the IUC request signal #1 and/or #2 to the UE #1 (S2202). The UE #1 may receive the IUC information #1 from the UE #2 and perform sidelink communication considering the IUC information #1.

FIG. 23 is a sequence chart illustrating a fifteenth exemplary embodiment of an IUC information transmission method.

As shown in FIG. 23, the UE #1 may not know a priority of the UE #2, the UE #2 may not know a priority of the UE #1, and priority information of the UE may not be transmitted through an IUC request signal. Alternatively, the priority of the UE #1 may be the same as the priority of the UE #2. A UE operating as the UE-B may be determined based on a transmission order (or reception order) of the IUC request signals. A UE operating as the UE-A may be determined based on a reception order (or reception order) of the IUC request signals.

The UE #1 may transmit an IUC request signal #1 before the UE #2 (S2301). In the instant case, the UE #1 may operate as the UE-B. The UE #2 may receive the IUC request signal #1 from the UE #1, and transmit a HARQ feedback #1 (e.g., ACK) for the IUC request signal #1 to the UE #1 (S2302). When the IUC request signal #1 of the UE #1 is successfully received, the UE #2 may not transmit an IUC request signal #2. That is, the UE #2 may operate as the UE-A. The UE #2 may transmit IUC information #1 generated based on the IUC request signal #1 and/or #2 to the UE #1 (S2303). The UE #1 may receive the IUC information #1 from the UE #2 and perform sidelink communication considering the IUC information #1.

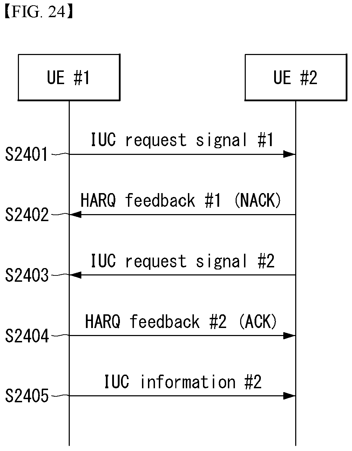

FIG. 24 is a sequence chart illustrating a sixteenth exemplary embodiment of an IUC information transmission method.

As shown in FIG. 24, the UE #1 may transmit an IUC request signal #1 to the UE #2 (S2401). When reception of the IUC request signal #1 fails, the UE #2 may transmit a HARQ feedback #1 (i.e., NACK) for the IUC request signal #1 to the UE #1 (S2402). The UE #1 may receive the HARQ feedback #1 from the UE #2. When reception of the IUC request signal #1 fails, the UE #2 may transmit an IUC request signal #2 to the UE #1 instead of IUC information #1 (S2403). When reception of the IUC request signal #2 is successful, the UE #1 may transmit a HARQ feedback #2 (i.e., ACK) for the IUC request signal #2 to the UE #2 (S2404). The UE #2 may receive the HARQ feedback #2 from the UE #1.

When reception of the IUC request signal #2 is successful, the UE #1 may operate as the UE-A. When ACK for the IUC request signal #2 is received, the UE #2 may operate as the UE-B. That is, the UE #2 may expect the UE #1 to operate as the UE-A. The UE #1 may transmit IUC information #2 generated based on the IUC request signal #1 and/or #2 to the UE #2 (S2405). The UE #2 may receive the IUC information #2 from the UE #1 and perform sidelink communication considering the IUC information #2. In the exemplary embodiment of FIG. 24, a UE operating as the UE-A or UE-B may be determined based on a time of successful reception of the IUC request signal.

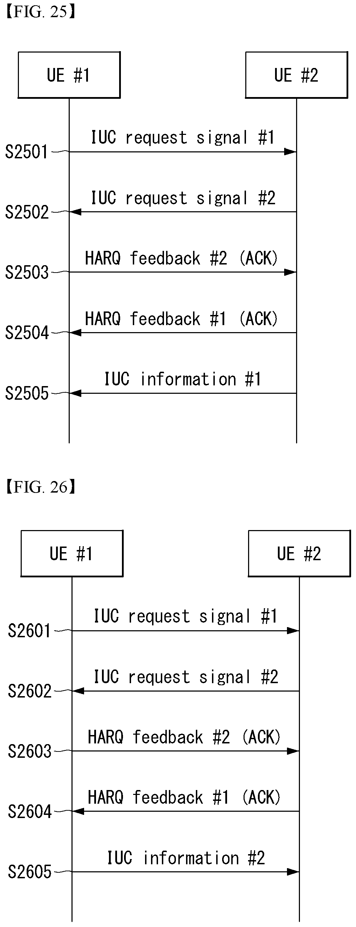

FIG. 25 is a sequence chart illustrating a seventeenth exemplary embodiment of an IUC information transmission method.

As shown in FIG. 25, a transmission order of IUC request signals may be different from a transmission order of HARQ feedbacks for the corresponding IUC request signals. In the instant case, a UE operating as the UE-A or UE-B may be determined based on a transmission and reception order of the IUC request signals.

The UE #1 may transmit an IUC request signal #1 to the UE #2 (S2501). The UE #2 may transmit an IUC request signal #2 to the UE #1 (S2502). When reception of the IUC request signal #2 is successful, the UE #1 may transmit a HARQ feedback (i.e., ACK) for the IUC request signal #2 to the UE #2 (S2503). When reception of the IUC request signal #1 is successful, the UE #2 may transmit a HARQ feedback (i.e., ACK) for the IUC request signal #1 to the UE #1 (S2504). A transmission time (or reception time) of the IUC request signal #1 may be before a transmission time (or reception time) of the IUC request signal #2, and a transmission time (or reception time) of the HARQ feedback #1 for the IUC request signal #1 may be after a transmission time (or reception time) of the HARQ feedback #2 for the IUC request signal #2.

Since the transmission time (or reception time) of the IUC request signal #1 is before the transmission time (or reception time) of the IUC request signal #2, the UE #1 may operate as the UE-B, and the UE #2 may operate as the UE-A. The UE #2 may transmit IUC information #1 generated based on the IUC request signal #1 and/or #2 to the UE #1 (S2505). The UE #1 may receive the IUC information #1 from the UE #2 and perform sidelink communication considering the IUC information #1.

FIG. 26 is a sequence chart illustrating an eighteenth exemplary embodiment of an IUC information transmission method.

As shown in FIG. 26, a transmission order of IUC request signals may be different from a transmission order of HARQ feedbacks for the corresponding IUC request signals. In the instant case, a UE operating as the UE-A or UE-B may be determined based on a transmission and reception order of the HARQ feedbacks.

The UE #2 may transmit an IUC request signal #2 to the UE #1 (S2602). When reception of the IUC request signal #2 is successful, the UE #1 may transmit a HARQ feedback (i.e., ACK) for the IUC request signal #2 to the UE #2 (S2603). When reception of the IUC request signal #1 is successful, the UE #2 may transmit a HARQ feedback (i.e., ACK) for the IUC request signal #1 to the UE #1 (S2604). A transmission time (or reception time) of the IUC request signal #1 may be before a transmission time (or reception time) of the IUC request signal #2, and a transmission time (or reception time) of the HARQ feedback #1 for the IUC request signal #1 may be after a transmission time (or reception time) of the HARQ feedback #2 for the IUC request signal #2.

Since the transmission time (or reception time) of the HARQ feedback #2 is before the transmission time (or reception time) of the HARQ feedback #1, the UE #1 may operate as the UE-A, and the UE #2 may operate as the UE-B. The UE #1 may transmit IUC information #2 generated based on the IUC request signal #1 and/or #2 to the UE #2 (S2605). The UE #2 may receive the IUC information #2 from the UE #1 and perform sidelink communication considering the IUC information #2.

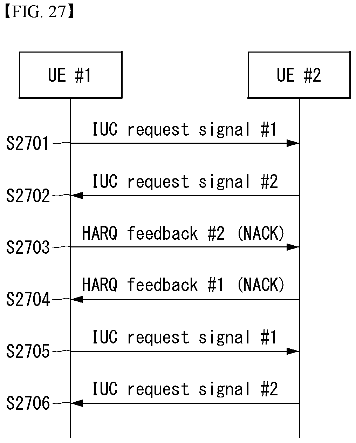

FIG. 27 is a sequence chart illustrating a nineteenth exemplary embodiment of an IUC information transmission method.

As shown in FIG. 27, the UE #1 may transmit an IUC request signal #1 to the UE #2 (S2701). The UE #2 may transmit an IUC request signal #2 to the UE #1 (S2702). When reception of the IUC request signal #2 fails, the UE #1 may transmit a HARQ feedback (i.e., NACK) for the IUC request signal #2 to the UE #2 (S2703). When reception of the IUC request signal #1 fails, the UE #2 may transmit a HARQ feedback (i.e., NACK) for the IUC request signal #1 to the UE #1 (S2704). Since reception of the IUC request signals #1 and #2 fails, a retransmission procedure of the IUC request signals may be performed. The UE #1 may retransmit the IUC request signal #1 to the UE #2 (S2705). The UE #2 may retransmit the IUC request signal #2 to the UE #1 (S2706). Then, operations of the UE #1 and/or UE #2 may be performed according to at least one of the exemplary embodiments of FIGS. 22 to 26.

Methods according to the present disclosure may be implemented in form of program instructions executable through various computer means, and may be recorded on a computer-readable medium. The computer-readable medium may include the program instructions, data files, data structures, etc., singly or in combination. The program instructions recorded on the computer-readable medium may be specially designed and constructed for the present disclosure or may be known and usable by those skilled in the computer software art.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE) #3, the method comprising:
performing an operation of receiving an inter-UE coordination (IUC) request signal #1 from a UE #1 and an operation of receiving an IUC request signal #2 from a UE #2;
determining one of the UE #1 and the UE #2 as a reception target of IUC information based on priorities; and
transmitting the IUC information generated based on the IUC request signal #1 or the IUC request signal #2 to the reception target.

2. The method of claim 1, wherein the IUC request signal #1 includes information on a priority #1 of the UE #1, the IUC request signal #2 includes information on a priority #2 of the UE #2, the IUC information is transmitted to the UE #1 when the priority #1 is higher than the priority #2, and the IUC information is transmitted to the UE #2 when the priority #2 is higher than the priority #1.

3. The method of claim 1, wherein the priorities are determined based on a reception time #1 of the IUC request signal #1 and a reception time #2 of the IUC request signal #2.

4. The method of claim 3,
wherein when the reception time #1 is before the reception time #2 in a time domain, the priority #1 of the UE #1 is determined to be higher than the priority #2 of the UE #2, and the IUC information is transmitted to the UE #1; and
wherein when the reception time #2 is before the reception time #1 in the time domain, the priority #2 of the UE #2 is determined to be higher than the priority #1 of the UE #1, and the IUC information is transmitted to the UE #2.

5. The method of claim 1, further comprising:
transmitting, to the UE #1, a hybrid automatic repeat request (HARQ) feedback #1 for the IUC request signal #1; and
transmitting, to the UE #2, a HARQ feedback #2 for the IUC request signal #2,
wherein when both the HARQ feedback #1 and the HARQ feedback #2 indicate acknowledgement (ACK), the reception target is determined based on information on a priority #1 of the UE #1 included in the IUC request signal #1 and information on a priority #2 of the UE #2 included in IUC request signal #2.

6. The method of claim 1, further comprising:
transmitting, to the UE #1, a HARQ feedback #1 for the IUC request signal #1; and
transmitting, to the UE #2, a HARQ feedback #2 for the IUC request signal #2,
wherein when the HARQ feedback #1 indicates ACK and the HARQ feedback #2 indicates negative ACK (NACK), the reception target is determined as the UE #1 transmitting the IUC request signal #1 associated with the ACK.

7. The method of claim 1, further comprising:
transmitting, to the UE #1, a HARQ feedback #1 for the IUC request signal #1; and
transmitting, to the UE #2, a HARQ feedback #2 for the IUC request signal #2,
wherein when the HARQ feedback #1 indicates NACK and the HARQ feedback #2 indicates ACK, the reception target is determined as the UE #2 transmitting the IUC request signal #2 associated with the ACK.

8. The method of claim 1, wherein the IUC request signal #1 is included in sidelink control information (SCI) #1 transmitted by the UE #1, and the IUC request signal #2 is included in SCI #2 transmitted by the UE #2.

9. A method of a user equipment (UE) #1, the method comprising:
performing an operation of transmitting an inter-UE coordination (IUC) request signal #1 to a UE #2 and an operation of receiving an IUC request signal #2 from the UE #2;
determining an IUC operation to be performed by the UE #1 based on a result of comparation between a priority #1 of the UE #1 and a priority #2 of the UE #2; and
performing the IUC operation,
wherein the IUC operation is a first operation in which the UE #1 receives IUC information #1 according to the IUC request signal #1 from the UE #2 or a second operation in which the UE #1 transmits IUC information #2 according to the IUC request signal #2 to the UE #2.

10. The method of claim 9, wherein the first operation is performed when the priority #1 is higher than the priority #2, and the second operation is performed when the priority #1 is lower than the priority #2.

11. The method of claim 9, wherein the IUC request signal #1 includes information on the priority #1, the IUC request signal #2 includes information on the priority #2, the IUC request signal #1 is included in sidelink control information (SCI) #1 transmitted by the UE #1, and the IUC request signal #2 is included in SCI #2 transmitted by the UE #2.

12. The method of claim 9,
wherein when a transmission time #1 of the IUC request signal #1 is before a transmission time #2 of the IUC request signal #2, the priority #1 is determined to be higher than the priority #2, and the first operation is performed; and
wherein when the transmission time #1 is after the transmission time #2, the priority #1 is determined to be lower than the priority #2, and the second operation is performed.

13. The method of claim 9, further comprising: performing an operation of receiving a hybrid automatic repeat request (HARQ) feedback #1 for the IUC request signal #1 from the UE #2 and an operation of transmitting a HARQ feedback #2 for the IUC request signal #2 to the UE #2,
wherein when a transmission time #1 of the HARQ feedback #1 is before a transmission time #2 of the HARQ feedback #2, the priority #1 is determined to be higher than the priority #2, and the first operation is performed; and
wherein when the transmission time #1 is after the transmission time #2, the priority #1 is determined to be lower than the priority #2, and the second operation is performed.

14. The method of claim 9, further comprising: performing an operation of receiving a HARQ feedback #1 for the IUC request signal #1 from the UE #2 and an operation of transmitting a HARQ feedback #2 for the IUC request signal #2 to the UE #2,
wherein when both the HARQ feedback #1 and the HARQ feedback #2 indicate acknowledgement (ACK), the IUC operation is determined based on information on the priority #1 included in the IUC request signal #1 and information on the priority #2 included in the IUC request signal #2.

15. The method of claim 9, further comprising: performing an operation of receiving a HARQ feedback #1 for the IUC request signal #1 from the UE #2 and an operation of transmitting a HARQ feedback #2 for the IUC request signal #2 to the UE #2,
wherein when the HARQ feedback #1 indicates ACK and the HARQ feedback #2 indicate negative ACK (NACK), the priority #1 is determined to be higher than the priority #2, and the first operation is performed.

16. The method of claim 9, further comprising: performing an operation of receiving a HARQ feedback #1 for the IUC request signal #1 from the UE #2 and an operation of transmitting a HARQ feedback #2 for the IUC request signal #2 to the UE #2,
wherein when the HARQ feedback #1 indicates NACK and the HARQ feedback #2 indicate ACK, the priority #1 is determined to be lower than the priority #2, and the second operation is performed.

17. A user equipment (UE) #3 comprising a processor, wherein the processor causes the UE #3 to perform:
performing an operation of receiving an inter-UE coordination (IUC) request signal #1 from a UE #1 and an operation of receiving an IUC request signal #2 from a UE #2;
determining one of the UE #1 and the UE #2 as a reception target of IUC information based on priorities; and
transmitting the IUC information generated based on the IUC request signal #1 or the IUC request signal #2 to the reception target.

18. The UE #3 of claim 17, wherein the IUC request signal #1 includes information on a priority #1 of the UE #1, the IUC request signal #2 includes information on a priority #2 of the UE #2, the IUC information is transmitted to the UE #1 when the priority #1 is higher than the priority #2, and the IUC information is transmitted to the UE #2 when the priority #2 is higher than the priority #1.

19. The UE #3 of claim 17,
wherein when a reception time #1 of the IUC request signal #1 is before a reception time #2 of the IUC request signal #2 in a time domain, a priority #1 of the UE #1 is determined to be higher than a priority #2 of the UE #2, and the IUC information is transmitted to the UE #1; and
wherein when the reception time #2 is before the reception time #1 in the time domain, the priority #2 of the UE #2 is determined to be higher than the priority #1 of the UE #1, and the IUC information is transmitted to the UE #2.

20. The UE #3 of claim 17, wherein the processor further causes the UE #3 to perform:
transmitting, to the UE #1, a hybrid automatic repeat request (HARQ) feedback #1 for the IUC request signal #1; and
transmitting, to the UE #2, a HARQ feedback #2 for the IUC request signal #2,
wherein the priorities are determined based on acknowledgement (ACK) or negative ACK (NACK) indicated by each of the HARQ feedback #1 and the HARQ feedback #2.
